(19) **Europäisches Patentamt European Patent Office Office européen des brevets**

(11) **EP 4 683 097 A1**

(12) **EUROPEAN PATENT APPLICATION**
published in accordance with Art. 153(4) EPC

(43) Date of publication:
**21.01.2026 Bulletin 2026/04**

(51) International Patent Classification (IPC):
*H01M 50/533* (2021.01)    *H01M 4/04* (2006.01)
*H01M 10/04* (2006.01)

(21) Application number: **23927102.6**

(22) Date of filing: **27.10.2023**

(52) Cooperative Patent Classification (CPC):
**H01M 4/04; H01M 4/13; H01M 10/04;
H01M 10/0525; H01M 10/0587; H01M 50/533**

(86) International application number:
**PCT/CN2023/127021**

(87) International publication number:
**WO 2024/187760 (19.09.2024 Gazette 2024/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.03.2023 CN 202310284841**

(71) Applicant: **BYD Company Limited
Shenzhen, Guangdong 518118 (CN)**

(72) Inventors:
• **WANG, Guoliang
Shenzhen, Guangdong 518118 (CN)**
• **GUO, Guannan
Shenzhen, Guangdong 518118 (CN)**
• **RONG, Liangbin
Shenzhen, Guangdong 518118 (CN)**
• **SONG, Bo
Shenzhen, Guangdong 518118 (CN)**
• **LIU, Huitian
Shenzhen, Guangdong 518118 (CN)**

(74) Representative: **Mathys & Squire
The Shard
32 London Bridge Street
London SE1 9SG (GB)**

(54) **BATTERY CELL AND BATTERY**

(57)    Disclosed is a battery. The battery includes a battery cell. The battery cell includes: positive electrode sheets, negative electrode sheets and separators. The positive electrode sheets, the negative electrode sheets and the separators are mutually stacked, the battery cell is formed by winding the positive electrode sheets, the separators and the negative electrode sheets, and the positive electrode sheets, the negative electrode sheets and the separators form a plurality of electrode rings in a radial direction. The positive electrode sheets and the negative electrode sheets each include a sheet body, a bare foil region and a plurality of tabs. The bare foil region is arranged on one side of the sheet body in a height direction, and the plurality of tabs are spaced apart on one side of the bare foil region facing away from the sheet body. A tab ring of an outer one of the electrode rings covers a tab ring of an inner one of the electrode rings. A relatively complete plane is obtained after the tabs of each ring are flattened, thereby forming a flat tab plane internally having no hole caused by stacking of the tabs or an uneven thickness of the tabs.

FIG. 1

EP 4 683 097 A1

## Description

### CROSS-REFERENCE TO RELATED APPLICATIONS

This application claims the priority to Chinese Patent Application No. 202310284841.9, filed with the China National Intellectual Property Administration on March 15, 2023 and entitled "BATTERY CELL AND BATTERY", which is incorporated herein by reference in its entirety.

### TECHNICAL FIELD

The present disclosure relates to the technical field of battery cells, and in particular to a battery cell and a battery.

### BACKGROUND

With advantages such as light weight and excellent safety performance, lithium-ion batteries hold a dominant position in applications in the fields of portable power banks and mobile electronic devices such as Bluetooth headsets, mobile phones, laptops, tablets, and cameras. Moreover, the lithium-ion batteries have been used in batches in the fields of electric motorcycles and electric vehicles.

Development of multi-tab technologies has significantly increased energy density of the lithium-ion batteries, which has contributed to development of the lithium-ion industry in China. At present, a bare foil region (also referred to as a tab region) at an edge of a current collector is reserved on a multi-tab battery cell when an electrode sheet is coated. After roll-pressing and splitting, the bare foil region at the edge of the current collector is cut to form a plurality of tabs before winding.

In related technologies, after quadrilateral-shaped tabs on each electrode ring are flattened, partially overlapped regions exist at positions on both sides, resulting in stacking of the tabs on this ring on a flattened plane. Moreover, when the number of tab rings is increased, the number of tab layers stacked on an inner ring and that on an outer ring are inconsistent, causing inconsistency in thickness of tab layers on the inner ring and the outer ring, and poor flatness of the entire flattened plane of the tabs.

### SUMMARY

The present disclosure aims to solve at least one of the technical problems in the existing technologies. To this end, the present disclosure provides a battery cell. A tab ring of an outer one of electrode rings covers a tab ring of an inner one of the electrode rings. A relatively complete plane is obtained after the tabs of each ring are flattened, having no hole inside caused by stacking of the tabs or an uneven thickness of the tabs, thereby improving the yield of welding between the tabs and a current collector.

The present disclosure further provides a battery.

A battery cell according to embodiments of a first aspect of the present disclosure includes: positive electrode sheets, negative electrode sheets and separators, wherein the positive electrode sheets, the negative electrode sheets, and the separators are mutually stacked, the battery cell is formed by winding the positive electrode sheets, the separators and the negative electrode sheets, and the positive electrode sheets, the negative electrode sheets and the separators form a plurality of electrode rings in a radial direction; the positive electrode sheets and the negative electrode sheets each including: a sheet body, a bare foil region and a plurality of tabs, the bare foil region being arranged on one side of the sheet body in a height direction, the plurality of tabs being spaced apart on one side of the bare foil region facing away from the sheet body, the plurality of tabs of the positive electrode sheet forming a positive tab ring, and the plurality of tabs of the negative electrode sheet forming a negative tab ring; and the tab ring of an outer one of the electrode rings covering the tab ring of an inner one of the electrode rings.

According to the battery cell of the embodiments of the present disclosure, a tab ring of an outer one of the electrode rings covers a tab ring of an inner one of the electrode rings. A relatively complete plane is obtained after the tabs of each ring are flattened, thereby forming a flat tab plane internally having no hole caused by stacking of the tabs or an uneven thickness of the tabs, and improving the yield of welding between the tabs and a current collector.

According to some embodiments of the present disclosure, the tabs have an isosceles trapezoid shape, and an included angle of a lower base of the isosceles trapezoid is $\alpha$; and the plurality of tabs of the same ring have the same $\alpha$.

According to some embodiments of the present disclosure, an included angle of the tabs of the first ring is $\alpha 1$, an included angle of the tabs of the $n^{th}$ ring is $\alpha n$, $\alpha n \geq$ arcsin(1 - 1/2Rn), where Rn is a distance between a central hole and the tabs of the $n^{th}$ electrode ring.

According to some embodiments of the present disclosure, a total length of lower bases of the plurality of tabs of the same ring is D, and D is a circumference of an arc obtained after the electrode ring is wound; and a total length of the lower bases of the tabs of the first ring is D1, a total length of the lower bases of the tabs of the $n^{th}$ ring is Dn, a length of the lower base of the tab of the first ring is d1, and a length of the lower base of the tab of the $n^{th}$ ring is dn, where dn = Dn * (180 - 2 * $\alpha$n)/360.

According to some embodiments of the present disclosure, the plurality of electrode rings are divided into at least two groups, each group including at least two electrode rings, and the tab ring of an outer one of the electrode rings in each group covering the tab ring of an inner one of the electrode rings in this group.

According to some embodiments of the present disclosure, a gap L is provided between the tabs of two adjacent rings in the same group.

According to some embodiments of the present disclosure, in each group, the tabs of the same ring have the same height, and the heights of the tabs of the rings are gradually increased in a radial direction from inside to outside.

According to some embodiments of the present disclosure, the height Hn of the tabs of the $n^{th}$ ring in each group in the radial direction from inside to outside satisfies the following equation: $Hn = T0 * (n - 1) + tn$, where T0 is a thickness of the electrode ring, tn is a sum of T1 to Tn, $T_n$ is a thickness of a ring structure formed by the gap L between the tabs of the $n^{th}$ ring and the tabs of the $(n-1)^{th}$ ring, and n is an integer greater than or equal to 2.

According to some embodiments of the present disclosure, a gap is provided in front of the tabs of the first ring in each group in the radial direction from inside to outside.

A battery according to embodiments of a second aspect of the present disclosure includes: a housing; and the battery cell, wherein the battery cell is packaged in the housing.

Additional aspects and advantages of the present disclosure will be partially provided in the following description, some of which will become clear in the following description, or may be learned by practice of the present disclosure.

## BRIEF DESCRIPTION OF DRAWINGS

The above and/or additional aspects and advantages of the present disclosure will become clear and easy to understand from the following description of the embodiments in combination with the accompanying drawings. In the figures:

>    FIG. 1 is a schematic structural diagram of an electrode sheet according to an embodiment of the present disclosure;
>    FIG. 2 is a partial schematic diagram A in FIG. 1;
>    FIG. 3 is a partial schematic diagram B in FIG. 1; and
>    FIG. 4 is a top view of a battery cell according to an embodiment of the present disclosure.

Reference numbers:

1, battery cell; 11, sheet body; 12, bare foil region; 13, tab; and 14, tab ring.

## DESCRIPTION OF EMBODIMENTS

The embodiments of the present disclosure will be described in detail below. The embodiments described with reference to the accompanying drawings are exemplary, and the embodiments of the present disclosure will be described in detail below.

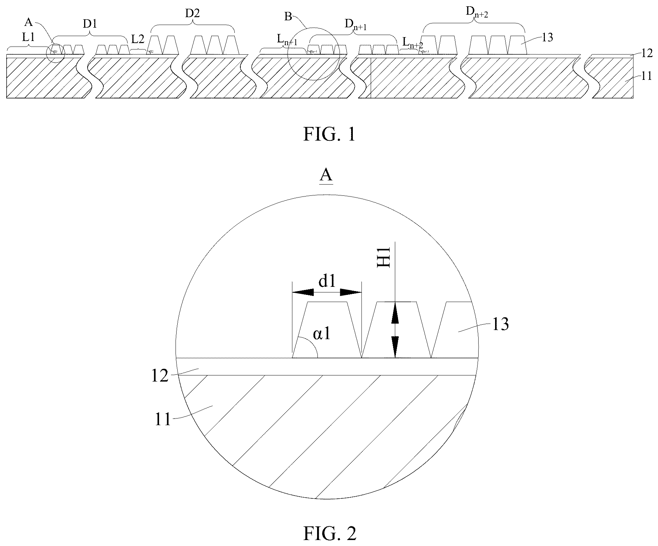

A battery cell 1 according to an embodiment of the present disclosure is described below with reference to FIG. 1 to FIG. 4. The present disclosure further provides a battery.

The battery cell 1 of this embodiment of the present disclosure includes: positive electrode sheets, negative electrode sheets and separators, wherein the positive electrode sheets, the negative electrode sheets, and the separators are mutually stacked, the battery cell 1 is formed by winding the positive electrode sheets, the separators and the negative electrode sheets, and the positive electrode sheets, the negative electrode sheets and the separators form a plurality of electrode rings in a radial direction.

The positive electrode sheets and the negative electrode sheets each include: a sheet body 11, a bare foil region 12 and a plurality of tabs 13, the bare foil region 12 being arranged on one side of the sheet body 11 in a height direction, the plurality of tabs 13 being spaced apart on one side of the bare foil region 12 facing away from the sheet body 11, the plurality of tabs of the positive electrode sheet forming a positive tab ring, and the plurality of tabs of the negative electrode sheet forming a negative tab ring; and the tab ring 14 of an outer one of the electrode rings covering the tab ring 14 of an inner one of the electrode rings. The sheet body 11 is coated with a positive electrode active material or a negative electrode active material, and the bare foil region 12 is an undie-cut foil material and plays a supporting function when the tabs 13 are flattened. After being flattened, the plurality of tabs 13 of each tab ring 14 are not misaligned and have no obvious gap.

Moreover, the battery cell 1 includes the plurality of electrode rings, and each electrode ring includes positive electrode sheets, negative electrode sheets and two layers of separators.

After the plurality of electrode rings are wound, the trapezoidal tabs 13 of each electrode ring can be combined into a relatively complete circle once flattened. Moreover, the tab ring 14 of an outer one of the electrode rings covers the tab ring 14 of an inner one of the electrode rings. A relatively complete plane is obtained after the tabs 13 of each ring are flattened, thereby forming a flat tab 13 plane internally having no hole caused by stacking of the tabs 13 or an uneven thickness of the tabs 13, thereby improving the yield of welding between the tabs 13 and a current collector.

Therefore, by enabling the tab ring 14 of an outer one of the electrode rings to cover the tab ring 14 of an inner one of the electrode rings, a relatively complete plane is obtained after the tabs 13 of each ring are flattened, thereby forming a flat tab 13 plane internally having no hole caused by stacking of the tabs 13 or an uneven thickness of the tabs 13, and improving the yield of welding between the tabs 13 and a current collector.

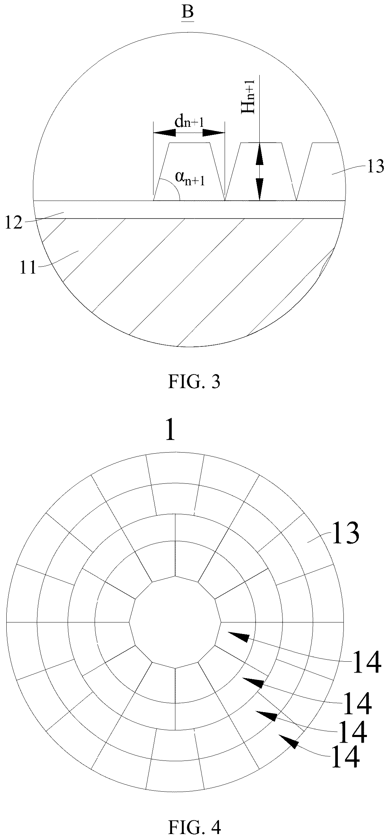

According to an implementation, with reference to FIG. 2 and FIG. 3, the tabs 13 have an isosceles trapezoid shape, and an included angle of a lower base of the isosceles trapezoid is $\alpha$; and the plurality of tabs 13 of the same ring have the same $\alpha$. Therefore, the tabs 13 in the same ring have an isosceles trapezoid shape. In this case, after the battery cell 1 is formed by winding, the tabs 13 on the electrode sheets in the same ring can be combined into a relatively complete circle after being flattened. Specifically, for every two adjacent tabs 13 from left to right, the lower base of the former tab 13 is connected to the lower base of the latter tab 13 (that is, no gap exists between the two tabs). In this way, the plurality of tabs 13 can be combined to form a complete circle.

According to an implementation, an included angle of the tabs 13 of the first ring is $\alpha 1$, an included angle of the tabs 13 of the $n^{th}$ ring is $\alpha n$, $\alpha n \geq \arcsin(1 - 1/2Rn)$, where Rn is a distance between a central hole and the tabs 13 of the $n^{th}$ electrode ring. With such an arrangement, the included angle $\alpha$ of the tabs 13 varies with each ring. Therefore, the included angle $\alpha$ of the tabs 13 can be adjusted on different rings based on a size of the battery cell 1, so that the plurality of tabs 13 can be conveniently folded.

According to an implementation, with reference to FIG. 1, a total length of lower bases of the plurality of tabs 13 of the same ring is D, and D is a circumference of an arc obtained after the electrode ring is wound; and a total length of the lower bases of the tabs 13 of the first ring is D1, a total length of the lower bases of the tabs 13 of the $n^{th}$ ring is Dn, a length of the lower base of the tab 13 of the first ring is d1, and a length of the lower base of the tab 13 of the $n^{th}$ ring is dn, where dn = Dn * (180 - 2 * $\alpha$n)/360. Therefore, since the tab ring 14 is a complete circle, that is, the length of the lower base of each tab 13 is the total length D of the lower bases of the plurality of tabs 13 of the same ring divided by the number of the tabs 13 in the tab ring 14. The number of the tabs 13 of the same ring may be calculated by means of (180 - 2 * $\alpha$n)/360.

Certainly, as the included angle of the lower base of the tab 13 is $\alpha$n, and the length of the lower base of the tab 13 of the $n^{th}$ ring is dn, an upper base of the tab 13 can be calculated. Therefore, an accurate shape of the tab 13 can be calculated.

According to an implementation, the plurality of electrode rings are divided into at least two groups, each group including at least two electrode rings, and the tab ring 14 of an outer one of the electrode rings in each group covers the tab ring 14 of an inner one of the electrode rings in this group. For example, two groups are used as an example. The first electrode ring to the $n^{th}$ electrode ring form one group, and the $(n+1)^{th}$ electrode ring to the $(n+N)^{th}$ electrode ring form one group. When the number of the electrode rings is large, that is, a diameter of the battery cell 1 is large, the plurality of electrode rings are divided into at least two groups. In this way, the height of the tabs 13 in each group of electrode rings is relatively small, thereby improving foil utilization. Moreover, narrow tabs 13 are more conducive to manufacturing, and the plurality of tab rings 14 can be mutually stacked conveniently.

With reference to FIG. 4, the plurality of electrode rings may be divided into two groups.

According to an implementation, with reference to FIG. 1, a gap L is provided between the tabs 13 of two adjacent rings in the same group. Further, the gap L satisfies the following equation: L $\geq$ 0 mm. That is, the gap L is provided between head and tail tabs 13 of two adjacent rings, and the gap L may be used as a buffer to avoid interference between tabs 13 of adjacent rings. Therefore, a complete tab ring 14 is obtained more easily.

According to an implementation, a gap is provided in front of the tabs 13 of the first ring in each group in the radial direction from inside to outside.

With reference to FIG. 1, a gap L1 is provided in front of the tabs 13 of the first ring (that is, the tabs 13 of the first ring in a first group). Further, the gap L1 satisfies the following equation: L1 $\geq$ 0 mm. The gap L1 is provided in front of the tabs 13 of the first ring. In this way, after the tabs 13 of the first ring are wound, the tab ring 14 is prevented from blocking the central hole of the battery cell 1 after being flattened, and interference between the tab ring 14 and a winding device is avoided.

Further, a gap $L_{n+1}$ is provided in front of the tabs 13 of the $(n+1)^{th}$ ring (that is, the tabs 13 of the first ring in a second group). Further, the gap $L_{n+1}$ satisfies the following equation: $L_{n+1} \geq 0$ mm. That is, the gap $L_{n+1}$ is provided between the tabs 13 of the plurality of rings in the first group and the tabs 13 of the plurality of rings in the second group, and the gap $L_{n+1}$ may be used as a buffer to avoid interference between the tabs 13 in two adjacent groups. Therefore, a complete tab ring 14 is obtained more easily.

According to an implementation, with reference to FIG. 1, in each group, the tabs 13 of the same ring have the same height, and the heights of the tabs 13 of the rings are gradually increased in a radial direction from inside to outside.

According to an implementation, the height Hn of the tabs of the $n^{th}$ ring in each group in the radial direction from inside to outside satisfies the following equation: Hn = T0 * (n - 1) + tn, where T0 is a thickness of the electrode ring, tn is a sum of T1 to Tn, $T_n$ is a thickness of a ring structure formed by the gap L between the tabs 13 of the $n^{th}$ ring and the tabs 13 of the $(n-1)^{th}$ ring, and n is an integer greater than or equal to 2. The height H1 of the tabs of the first ring in each group is not limited herein.

That is, the heights of the tabs 13 of the rings in each group gradually increase in the radial direction from inside to outside. Therefore, the tabs 13 of a latter ring can just cover the tabs 13 of the former ring after being flattened, thereby forming a flat tab 13 plane. The tabs 13 of the latter ring can compensate for holes caused by stacking the tabs 13 of the former ring or an uneven thickness of the tabs 13, thereby improving the yield of welding between the tabs 13 and a current collector.

Two or three or more electrode rings may be provided. For example, when four electrode rings are provided, the height of the tabs of the fourth electrode ring is H4 = 3 * T0 + t4. t4 is a thickness of a ring structure formed by superposition of a gap L2 between the first ring and the second ring, a gap L3 between the second ring and the third ring, and a gap L4 between the third ring and the fourth ring. For example, if L2+L3+L4 can form a complete one-loop ring structure, t4 is t0. For another example, if L2+L3+L4 can form a complete two-loop ring structure, t4 is 2*t0.

As an implementation, the plurality of electrode rings are wound to form a cylindrical battery cell 1. That is, the battery cell 1 described above is the cylindrical battery cell 1.

A battery according to embodiments of a second aspect of the present disclosure includes: a housing and a battery cell 1. The battery cell 1 is packaged in the housing.

In a method for manufacturing a battery cell 1 according to embodiments of the present disclosure, tabs 13 are shaped as a trapezoidal structure, and an included angle $\alpha$ formed between a lower base edge and a side edge of the tab 13 that come into contact with a bare foil region 12 is an acute angle. The tabs 13 are flattened towards a central hole during winding of electrode sheets. In this way, a roll pressure required for flattening the tabs 13 can be effectively reduced. Therefore, deformation of the electrode sheets having the plurality of tabs 13 is avoided. Moreover, detachment of an active material from the electrode sheets having the plurality of tabs 13 is reduced, and the yield of the wound battery cell 1 is greatly improved. Moreover, the tabs 13 can be flattened without a relatively large pressure, such that stress that may bend the tabs 13 can be reduced, thereby ensuring quality of the wound battery cell 1. Using the electrode sheets having the plurality of tabs 13 to manufacture the wound battery cell 1 features a simple design, and further achieves excellent electrical performance, a high yield, and high practicality.

In the description of the present disclosure, it will be understood that the orientations or positional relationships indicated by the terms "center", "longitudinal", "transversal", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the orientation or positional relationship shown in the accompanying drawings, and are only for ease of describing the present disclosure and simplifying the description, rather than indicating or implying that an indicated apparatus or element must have a specific orientation or must be constructed and operated in a specific orientation. Therefore, this cannot be understood as a limitation on the present disclosure.

In the description of this specification, the description with reference to the terms such as "an embodiment", "some embodiments", "illustrative embodiment", "example", "particular example", or "some examples" means that specific features, structures, materials, or characteristics described in combination with the embodiments or examples are included in at least one embodiment or example of the present disclosure. In this specification, the schematic descriptions of the terms described above do not necessarily refer to the same embodiment or example.

Although the embodiments of the present disclosure have been illustrated and described, it will be understood that those of ordinary skill in the art can make various changes, modifications, replacements and variations to the embodiments without departing from the principle and purpose of the present disclosure, and the scope of the present disclosure is limited by the claims and equivalents of the claims.

## Claims

1. A battery cell (1), comprising: positive electrode sheets, negative electrode sheets and separators, wherein the positive electrode sheets, the negative electrode sheets, and the separators are mutually stacked, the battery cell (1) is formed by winding the positive electrode sheets, the separators and the negative electrode sheets, and the positive electrode sheets, the negative electrode sheets and the separators form a plurality of electrode rings in a radial direction;

   the positive electrode sheets and the negative electrode sheets each comprise: a sheet body (11), a bare foil region (12) and a plurality of tabs (13), the bare foil region (12) is arranged on one side of the sheet body (11) in a height direction, the plurality of tabs (13) are spaced apart on one side of the bare foil region (12) facing away from the sheet body (11), the plurality of tabs (13) of the positive electrode sheet form a positive tab ring, and the plurality of tabs (13) of the negative electrode sheet form a negative tab ring; and the tab ring (14) of an outer one of the electrode rings covers the tab ring (14) of an inner one of the electrode rings.

2. The battery cell (1) according to claim 1, wherein the tabs (13) have an isosceles trapezoid shape, and an included angle of a lower base of the isosceles trapezoid is $\alpha$; and
the plurality of tabs (13) of the same ring have the same $\alpha$.

3. The battery cell (1) according to claim 2, wherein an included angle of the tabs (13) of the first ring is $\alpha 1$, an included angle of the tabs (13) of the $n^{th}$ ring is $\alpha n$, $\alpha n \geq \arcsin(1 - 1/2Rn)$, and Rn is a distance between a central hole and the tabs (13) of the $n^{th}$ electrode ring.

4. The battery cell (1) according to claim 3, wherein a total length of lower bases of the plurality of tabs (13) of the same ring is D, and D is a circumference of an arc obtained after the electrode ring is wound; and a total length of the lower bases of the tabs (13) of the first ring is D1, a total length of the lower bases of the tabs (13) of the $n^{th}$ ring is Dn, a length of the lower base of the tab (13) of the first ring is d1, and a length of the lower base of the tab (13) of the $n^{th}$ ring is dn, wherein

$$dn = Dn * (180 - 2 * \alpha n)/360.$$

5. The battery cell (1) according to any one of claims 1 to 4, wherein the plurality of electrode rings are divided into at least two groups, each group comprises at least two electrode rings, and the tab ring (14) of an outer one of the electrode rings in each group covers the tab ring (14) of an inner one of the electrode rings in this group.

6. The battery cell (1) according to claim 5, wherein a gap L is provided between the tabs (13) of two adjacent rings in the same group.

7. The battery cell (1) according to claim 6, wherein in each group, the tabs (13) of the same ring have the same height, and the heights of the tabs (13) of the rings are gradually increased in a radial direction from inside to outside.

8. The battery cell (1) according to claim 6 or 7, wherein the height Hn of the tabs of the $n^{th}$ ring in each group in the radial direction from inside to outside satisfies the following equation: Hn = T0 * (n - 1) + tn, wherein T0 is a thickness of the electrode ring, tn is a sum of T1 to Tn, $T_n$ is a thickness of a ring structure formed by the gap L between the tabs (13) of the $n^{th}$ ring and the tabs (13) of the $(n-1)^{th}$ ring, and n is an integer greater than or equal to 2.

9. The battery cell (1) according to any one of claims 5 to 8, wherein a gap is provided in front of the tabs (13) of the first ring in each group in the radial direction from inside to outside.

10. A battery, comprising:

   a housing; and
   the battery cell (1) according to any one of claims 1 to 9, wherein the battery cell (1) is packaged in the housing.

FIG. 1

FIG. 2

B

$d_{n+1}$

$H_{n+1}$

$\alpha_{n+1}$

13

12

11

FIG. 3

1

13

14

14

14

14

FIG. 4

## INTERNATIONAL SEARCH REPORT

| International application No. |
| --- |
| **PCT/CN2023/127021** |

**A. CLASSIFICATION OF SUBJECT MATTER**

H01M50/533(2021.01)i; H01M4/04(2006.01)i; H01M10/04(2006.01)i

According to International Patent Classification (IPC) or to both national classification and IPC

**B. FIELDS SEARCHED**

Minimum documentation searched (classification system followed by classification symbols)

IPC: H01M50/-, H01M4/-, H01M10/-

Documentation searched other than minimum documentation to the extent that such documents are included in the fields searched

Electronic data base consulted during the international search (name of data base and, where practicable, search terms used)

CNTXT, DWPI, CNKI, STN: 电池, 电极, 极片, 极耳, 隔膜, battery, electrode, pole, tab, separator layer, separator film

**C. DOCUMENTS CONSIDERED TO BE RELEVANT**

| Category* | Citation of document, with indication, where appropriate, of the relevant passages | Relevant to claim No. |
| --- | --- | --- |
| X | CN 114122630 A (MICROVAST POWER SYSTEMS CO., LTD.) 01 March 2022 (2022-03-01) description, paragraphs 0054-0061, 0076 and 0083-0085, and figures 1-11 | 1-10 |
| X | CN 216529261 U (YUNSHAN NEW ENERGY MATERIAL TECHNOLOGY (SHENZHEN) CO., LTD.) 13 May 2022 (2022-05-13) description, embodiment 1 | 1-10 |
| X | WO 2022247665 A1 (MICROVAST POWER SYSTEMS CO., LTD.) 01 December 2022 (2022-12-01) description, paragraphs 0041-0067 | 1-10 |
| A | WO 2022166804 A1 (HUAWEI TECHNOLOGIES CO., LTD.) 11 August 2022 (2022-08-11) description, paragraphs 0061-0106 | 1-10 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "D" | document cited by the applicant in the international application | | |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **15 January 2024** | **20 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/127021**

| Patent document cited in search report | | | Publication date (day/month/year) | Patent family member(s) | | | Publication date (day/month/year) |
|---|---|---|---|---|---|---|---|
| CN | 114122630 | A | 01 March 2022 | None | | | |
| CN | 216529261 | U | 13 May 2022 | None | | | |
| WO | 2022247665 | A1 | 01 December 2022 | CN | 113193165 | B | 06 June 2023 |
| | | | | CN | 113193165 | A | 30 July 2021 |
| WO | 2022166804 | A1 | 11 August 2022 | CN | 114914552 | A | 16 August 2022 |

Form PCT/ISA/210 (patent family annex) (July 2022)

**REFERENCES CITED IN THE DESCRIPTION**

**Patent documents cited in the description**

- CN 202310284841